# EUROPEAN PATENT APPLICATION

(11) **EP 3 316 434 A1**
(43) Date of publication of application: **02.05.2018**
(21) Application number: 17194018.2
(22) Date of filing: 29.09.2017
(51) Int. Cl.: H02J 3/18, H02J 3/38, H02M 1/12

(54) **RESONANCE SUPPRESSION DEVICE**

(30) Priority: 25.10.2016 JP 2016208858
(71) Applicant: Fuji Electric Co., Ltd., Kawasaki-shi, Kanagawa 210-9530 (JP)
(72) Inventor: Kofuji, Kentaro, Kawasaki-shi, Kanagawa 210-9530 (JP)
(74) Representative: Appelt, Christian W.

(57) **Abstract**

The present invention is designed to provide a resonance suppression device that can implement an excellent resonance suppression function and operational stability while keeping the device capacity small. A current command value calculation unit (50) has a harmonic power calculation unit (54A), a differential power calculation unit (54B) and a gain multiplication unit (56). The harmonic power calculation unit (54A) calculates harmonic power (Pₕ) based on a harmonic voltage (Vₕ) of a connection point voltage (V). The differential power calculation unit (54B) calculates the differential power (Pₕ*-Pₕ) between the harmonic power (Pₕ) and target harmonic power (Pₕ*). The gain multiplication unit (56) calculates a current command value (i*) by multiplying the harmonic voltage (Vₕ) by a gain (gain K adjusted with PI control Kₚ+Kᵢ/s) that matches the differential power (Pₕ*-Pₕ).

## Description

### Technical Field

The present invention relates to a resonance suppression device, which is, for example, a resonance suppression device that is mounted in a voltage-source inverter connected to a power system such as an active power filter, a static reactive power compensation device (STATCOM), a self-commutated SFC and so on.

### Background Art

Patent literature 1 discloses a resonance suppression device for suppressing the resonance that is produced when a power facility (for example, a wind power generator) is connected to a power system. With this resonance suppression device, a current command value is generated by eliminating the fundamental wave component from the frequency components contained in the voltage of the power facility or the power system, and multiplying a frequency component by a gain (transfer function). By supplying a compensation current based on this current command value to the power system, the resonance suppression function is implemented.

The gain (transfer function) to use to generate a current command value is determined as follows. For example, in order to collectively suppress various harmonic components produced in a system comprised of a power facility and a power system (hereinafter simply referred to as a "system"), a gain that always assumes a fixed value is selected. Since the resonance suppression device absorbs harmonic current in harmonic voltage in the same phase (the phase of the harmonic voltage or the harmonic current is not changed, and only its magnitude is changed by applying a gain), the system behaves like a pure resistive load (impedance load). Consequently, the gain, which is a fixed value, is often set based on the reciprocal of the pure resistance value exhibited by the system.

Meanwhile, patent literature 1 discloses a control scheme for calculating the level of harmonic resonance (the amount of harmonics produced) by using the power facility's system current and so on, and increasing the gain (transfer function) when the level of harmonic resonance (the amount of harmonics produced) is high. In addition, patent literature 1 discloses a control scheme for correcting (adjusting) the value to be set as the gain, so that the current command value does not deviate from the predetermined range of a current limiter and/or the voltage command value does not deviate from the predetermined range of a voltage limiter (does not exceed the output capacity of the equipment).

### Citation List

### Patent Literature

Patent Literature 1: WO 2014/175214

### Summary of Invention

### Technical Problem

However, the magnitude of harmonic voltage contained in a power system is different from the magnitude of the fundamental voltage, and its range is not clearly defined. Under such circumstances, if the system behaves as a pure resistive load (impedance load), the harmonic current increases in proportion to the magnitude of the harmonic voltage, and, if the harmonic power increases in proportion to the square of the harmonic voltage and reaches an unintended level, the desired resonance suppression function may not be implemented, and the stability of operation may be hindered.

Also, although the magnitude of harmonic voltage can be estimated in advance based on system analysis, the accuracy of harmonic voltage analysis is inferior to the accuracy of fundamental voltage analysis because many power systems are designed based on the behavior and performance of the fundamental wave. Considering such roughness of the accuracy of harmonic voltage analysis, it is inevitable to design the device capacity to be excessively large if one intends to achieve a certain level of performance.

The present invention has been made in view of the above, and it is therefore an object of the present invention to provide a resonance suppression device that can implement an excellent resonance suppression function and operational stability while keeping the device capacity small.

### Solution to Problem

According to an embodiment of the present invention, a resonance suppression device has a current command value calculation unit that calculates a current command value based on a connection point voltage between a power facility and a power system, and a compensation current supply unit that supplies a compensation current based on the current command value to the power system, and, in this resonance suppression device, the current command value calculation unit has a harmonic power calculation unit that calculates harmonic power based on the harmonic voltage of the connection point voltage, a differential power calculation unit that calculates differential power between the harmonic power and target harmonic power, and a gain multiplication unit that calculates the current command value by multiplying the harmonic voltage by a gain corresponding to the differential power.

### Advantageous Effects of Invention

According to the present invention, it is possible to provide a resonance suppression device that can implement an excellent resonance suppression function and operational stability while keeping the device capacity small.

### Brief Description of Drawings

FIG. 1 is a block diagram to show a resonance suppression device provided in a wind power plant, according to a first embodiment;
FIG. 2 is a block diagram to show an internal configuration of the coefficient control unit of FIG. 1;
FIG. 3 is a block diagram to show a current command value calculation unit in a resonance suppression device, according to a second embodiment; and
FIG. 4 is a block diagram to show an internal configuration of a coefficient control unit in a resonance suppression device, according to a third embodiment.

### Description of Embodiments

### << First Embodiment >>

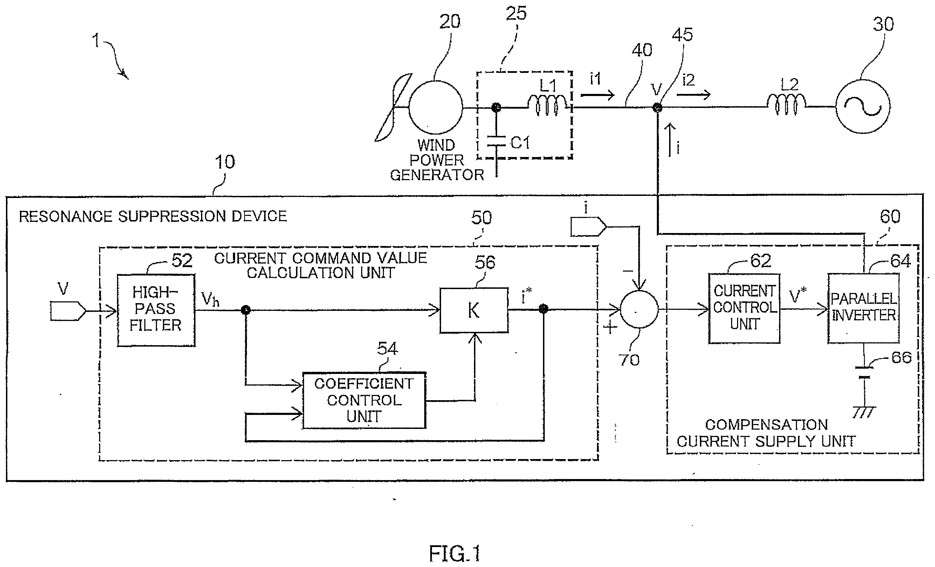

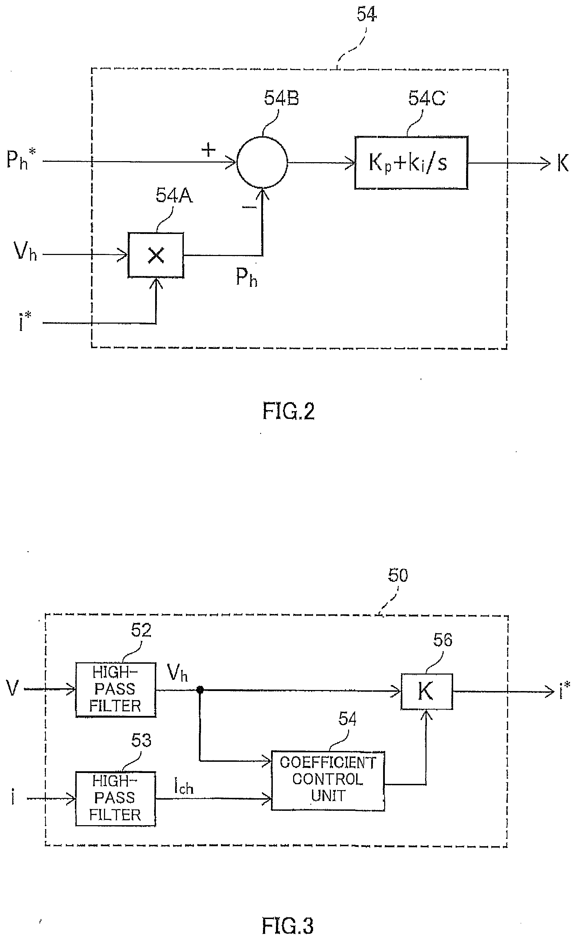

Now, the resonance suppression device 10 according to a first embodiment will be described in detail with reference to FIG. 1 and FIG. 2.

As shown in FIG. 1, the resonance suppression device 10 is installed in a wind power plant 1, and suppresses the resonance that is produced when a wind power generator (power facility) 20 is connected to a power system 30. The wind power generator 20 and the power system 30 are connected via a channel 40, and the resonance suppression device 10 is connected to a connection point 45, which is located in an intermediate part of the channel 40.

The wind power generator 20 has a harmonic filter 25, where the capacitor of the harmonic filter 25 is illustrated as C1, and the inductor of the harmonic filter 25 is illustrated as L1. Inductor L1 is equivalent to the inductor of a transformer that connects the wind power generator 20 to the power system 30. Also, the impedance of the power system 30 is illustrated as L2. Although L2 is often simulated simply as an inductor, because a variety of power generation facilities, customer facilities and power transmission facilities are connected to the actual power system and some of these facilities may have capacitors, this is, in effect, equivalent to having many LC resonance circuits. Furthermore, since the channel 40 is formed with a very long cable, the channel 40, in effect, is equivalent to an electric circuit with many LC resonance circuits. The resonance suppression device 10 has the function of suppressing the resonance caused by LC resonance circuits such as described above.

In FIG. 1, the current flowing from the wind power generator 20 to the connection point 45 on the channel 40 is represented by i1, and the current flowing from the connection point 45 of the channel 40 to the power system 30 is represented by i2. Also, the voltage at the connection point 45 on the channel 40 (the connection point voltage between the wind power generator 20 and the power system 30) is represented by V.

The resonance suppression device 10 has a current command value calculation unit 50 and a compensation current supply unit 60. The current command value calculation unit 50 calculates a current command value i^{*} based on the connection point voltage V between the wind power generator 20 and the power system 30. The compensation current supply unit 60 supplies a compensation current i (compensation current i following current command value i^{*}) based on current command value i^{*} to the connection point 45 of the channel 40 (and, furthermore, to the power system 30). The relationship here is that current i1 that flows from the wind power generator 20 to the connection point 45 on the channel 40 and current i2 that flows from the connection point 45 on the channel 40 to the power system 30 are compensated by compensation current i (i1+i=i2), so that it is possible to suppress the harmonic distortion due to the harmonic voltage (harmonic component) Vₕ (described later) of connection point voltage V.

The current command value calculation unit 50 has a high-pass filter 52, a coefficient control unit 54 and a variable gain output unit 56 (gain multiplication unit).

Connection point voltage V between the wind power generator 20 and the power system 30 is input to the high-pass filter 52. The high-pass filter 52 selectively allows only harmonic voltage Vₕ (harmonic component) of input connection point voltage V to pass. Harmonic voltage Vₕ that has passed the high-pass filter 52 is input to the coefficient control unit 54 and the variable gain output unit 56.

The coefficient control unit 54 generates a transfer function, which is a coefficient for determining a variable gain K, by which harmonic voltage Vₕ is multiplied (described later).

As shown in FIG. 2, the coefficient control unit 54 has a harmonic power calculation unit 54A, a differential power calculation unit 54B and a transfer function generation unit 54C (PI control unit).

The harmonic power calculation unit 54A calculates harmonic power Pₕ based on harmonic voltage Vₕ of connection point voltage V. More specifically, the harmonic power calculation unit 54A calculates harmonic power Pₕ by multiplying harmonic voltage Vₕ by current command value i*.

Harmonic power Pₕ calculated in the harmonic power calculation unit 54A and target harmonic power Pₕ^{*} are input to the differential power calculation unit 54B. The differential power calculation unit 54B calculates the differential power (Pₕ^{*}-Pₕ) between harmonic power Pₕ and target harmonic power Pₕ^{*}.

By executing PI control based on the differential power (Pₕ^{*}-Pₕ) between harmonic power Pₕ and target harmonic power Pₕ^{*}, calculated in the differential power calculation unit 54B, the transfer function generation unit 54C generates gain K so as to bring the differential power (Pₕ^{*}-Pₕ) near zero. The PI control by the transfer function generation unit 54C can be implemented by calculating, for example, Kₚ+Kᵢ/s. Note that the control by the transfer function generation unit 54C is not limited to PI control, and P control or I control may be performed as well. Furthermore, the value of the gain K may be kept within a desired range by applying an upper limit or a lower limit to the output of the transfer function generation unit 54C.

The variable gain output unit 56 is a calculation unit that receives harmonic voltage Vₕ as an input and outputs current command value i*, and its transfer function is the transfer function (variable gain K) generated in the coefficient control unit 54. This variable gain K changes dynamically in accordance with the differential power (Pₕ^{*}-Pₕ) between harmonic power Pₕ and target harmonic power Pₕ^{*}. The variable gain output unit 56 determines the magnitude of gain K according to the differential power (Pₕ^{*}-Pₕ) between harmonic power Pₕ and target harmonic power Pₕ^{*}. When harmonic power Pₕ is larger than target harmonic power Pₕ^{*}, gain K decreases, and the amplitude of current command value i* decreases. Then, harmonic power Pₕ to be output from the harmonic power calculation unit 54A becomes smaller and approaches the value of target harmonic power Pₕ^{*}. On the other hand, when harmonic power Pₕ is smaller than target harmonic power Pₕ^{*}, gain K increases, and the amplitude of current command value i* increases. Then, harmonic power Pₕ to be output from the harmonic power calculation unit 54A becomes larger, and approaches the value of target harmonic power Pₕ^{*}. As a result of this, the value of gain K is determined such that harmonic power Pₕ matches with target harmonic power Pₕ^{*}.

Current command value i* that is output from the current command value calculation unit 50 is input to an addition unit 70. In addition, actual compensation current i, which is based on current command value i*, is input to the addition unit 70. The addition unit 70 calculates the difference (i*-i) between current command value i* and compensation current i, and outputs this difference to the compensation current supply unit 60.

The compensation current supply unit 60 has a current control unit 62, a parallel inverter 64 and a direct current power supply 66.

To the current control unit 62, the difference (i*-i) between current command value i* and compensation current i is input from the addition unit 70. The current control unit 62 calculates a voltage command value V* based on the difference (i*-i) between input current command value i* and compensation current i.

The parallel inverter 64 is powered and driven by the direct current power supply 66. Voltage command value V* is input from the current control unit 62 to the parallel inverter 64. The parallel inverter 64 calculates compensation current i based on voltage command value V* that is received as input. The parallel inverter 64 is parallel-connected to the power system 30 via a transformer (not shown), and compensation current i that is output from the parallel inverter 64 is supplied to the power system 30 in parallel with output current i1 from the wind power generator 20 (i1+i=i2). Although, typically, this parallel inverter 64 is, for example, a device such as an active power filter, a static reactive power compensation device (STATCOM), a self-commutated SFC, and so on, besides these, a parallel compensation unit that is provided in a direct-parallel inverter in a unified power flow controller (UPFC) and so on may be used.

According to the resonance suppression device 10 configured as described above, in the current command value calculation unit 50, the harmonic power calculation unit 54A calculates harmonic power Pₕ based on harmonic voltage Vₕ of connection point voltage V, and the differential power calculation unit 54B calculates the differential power (Pₕ^{*}-Pₕ) between harmonic power Pₕ and target harmonic power Pₕ^{*}, the gain multiplication unit 56 calculates current command value i* by multiplying harmonic voltage Vₕ by gain K (where gain K is adjusted based on PI control Kₚ+Kᵢ/s) according to the differential power (Pₕ^{*}-Pₕ). By this means, harmonic power Pₕ that is output from the resonance suppression device 10 follows target harmonic power Pₕ^{*} accurately and becomes constant, so that it is possible to implement an excellent resonance suppression function and operational stability, while keeping the device capacity of the resonance suppression device 10 small. That is, by contrast with conventional resonance suppression devices, it is possible to prevent harmonic voltage and harmonic current from being unnecessarily high, unintentionally, and prevent harmonic power from being uncontrollable.

### << Second Embodiment >>

FIG. 3 is a block diagram to show a current command value calculation unit 50 of the resonance suppression device 10 according to a second embodiment.

In the second embodiment, the current command value calculation unit 50 has a high-pass filter 53 (a second high-pass filter). To the high-pass filter 53, an output current i of the resonance suppression device 10 is input. The high-pass filter 53 selectively allows only harmonic current I_{ch} of output current i that is input, to pass. The harmonic power calculation unit 54A of the coefficient control unit 54 calculates harmonic power Pₕ by multiplying harmonic voltage Vₕ at connection point voltage V by harmonic current I_{ch} of output current i of the resonance suppression device 10. Note that, although the present embodiment assumes that output current i of the resonance suppression device 10 contains components other than harmonic components and a high-pass filter 53 is provided so as to separate harmonic components alone, depending on the manner of use, harmonic components alone may be included in the output current of the resonance suppression device 10, and, in this case, the high-pass filter 53 is not necessary.

### << Third Embodiment >>

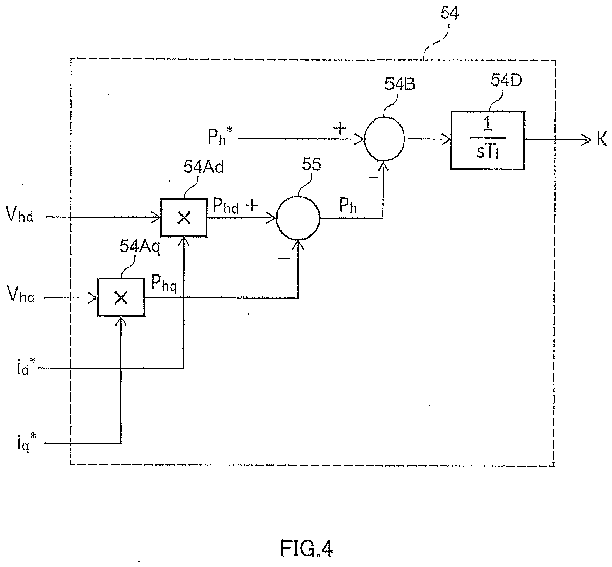

FIG. 4 is a block diagram to show an internal configuration of a coefficient control unit 54 of the resonance suppression device 10 according to a third embodiment. The resonance suppression device 10 of the third embodiment is a device for suppressing the resonance produced in a three-phase power system.

As shown in FIG. 4, in the coefficient control unit 54 of the resonance suppression device 10 according to the third embodiment, various components of the input/output systems are provided in association with the d axis and the q axis of a biaxial rectangular coordinate system. More specifically, the coefficient control unit 54 has a harmonic power calculation unit 54Ad (first harmonic power calculation unit), which corresponds to the d axis of the biaxial rectangular coordinate system, and a harmonic power calculation unit 54Aq (second harmonic power calculation unit), which corresponds to the q axis of the biaxial rectangular coordinate system.

The harmonic power calculation unit 54Ad calculates harmonic power P_{hd}, which corresponds to the d-axis, by multiplying harmonic voltage V_{hd} of d-axis voltage V_{d} of connection point voltage V by a current command value i_{d}^{*} corresponding to the d-axis. The harmonic power calculation unit 54Aq calculates harmonic power P_{hq}, which corresponds to the q axis, by multiplying harmonic voltage V_{hq} of q-axis voltage V_{q} of connection point voltage V by a current command value i_{q}^{*} corresponding to the q axis.

Harmonic power P_{hd} corresponding to the d axis, calculated in the harmonic power calculation unit 54Ad, and harmonic power P_{hq} corresponding to the q axis, calculated in the harmonic power calculation unit 54Aq, are added in the addition unit 55, thereby giving harmonic power Pₕ. The differential power calculation unit 54B calculates the differential power (Pₕ^{*}-Pₕ) between harmonic power Pₕ input from the addition unit 55 and target harmonic power Pₕ^{*}.

The transfer function generation unit 54D (I control unit) executes I control based on the differential power (Pₕ^{*}-Pₕ) between harmonic power Pₕ calculated in the differential power calculation unit 54B and target harmonic power Pₕ^{*}, thereby allowing gain K to change dynamically to bring this differential power (Pₕ^{*}-Pₕ) near zero. Note that the control by the transfer function generation unit 54D is not limited to I control, and P control or PI control may be used.

Note that the present invention is not limited to the above embodiments, and various changes can be made. In the above embodiment, the size, shape, function, and the like of the components shown in the attached drawings are not limited and can be appropriately changed within the range the effect of the present invention can be achieved. Besides, various alterations can be implemented as appropriate without departing from the scope of the object of the present invention.

For example, the power facility may be a power generation facility that may produce resonance, such as a wind power generator or a solar power generator, may be a consumer facility that has a power supply device for railway use or for an aluminum smelting plant, and that may produce resonance, or may be a transmission/distribution facility that may produce resonance such as a DC power transmission converter (there are degrees of freedom as to what is applicable as a power facility).

For example, in the third embodiment, the harmonic voltage of the dq axes and the harmonic current are cross-multiplied in the calculation of the harmonic power, but the same calculation can be made based on Clark coordinates (αβ coordinates).

Also, although, in the description of the first to third embodiments, various powers are effective power, apparent power can also be used. Although there are cases where harmonic power is not perfectly a direct current amount, fluctuating components may be suppressed by applying a low-pass filter such as a first order lag. However, in feedback control including the integral term such as in I control, there is a case that it is not necessary to add the first order lag.

### Industrial Applicability

The resonance suppression device of the present invention is suitable for application to, for example, a wind power plant equipped with a wind power generator.

## Claims

1. A resonance suppression device comprising:
a current command value calculation unit that calculates a current command value based on a connection point voltage between a power facility and a power system; and
a compensation current supply unit that supplies a compensation current based on the current command value to the power system,
wherein the current command value calculation unit comprises:
a harmonic power calculation unit that calculates harmonic power based on the harmonic voltage of the connection point voltage;
a differential power calculation unit that calculates differential power between the harmonic power and target harmonic power; and
a gain multiplication unit that calculates the current command value by multiplying the harmonic voltage by a gain corresponding to the differential power.

2. The resonance suppression device according to claim 1, further comprising a control unit that makes the gain, by which the harmonic voltage is multiplied, change dynamically, so as to bring the differential power near zero.

3. The resonance suppression device according to claim 1 or claim 2, wherein the harmonic power calculation unit calculates the harmonic power by multiplying the harmonic voltage by the current command value.

4. The resonance suppression device according to claim 1 or claim 2, wherein the harmonic power calculation unit calculates the harmonic power by multiplying the harmonic voltage by harmonic current of output current of the resonance suppression device.

5. The resonance suppression device according to one of claim 1 to claim 4, wherein the harmonic power calculation unit comprises:
a first harmonic power calculation unit that receives a harmonic voltage corresponding to a d axis in a biaxial rectangular coordinate system as an input and outputs the harmonic power corresponding to the d axis; and
a second harmonic power calculation unit that receives a harmonic voltage corresponding to a q axis in the biaxial rectangular coordinate system as an input and outputs the harmonic power corresponding to the q axis.
